# EUROPEAN PATENT APPLICATION

(11) **EP 2 746 956 A2**
(43) Date of publication of application: **25.06.2014**
(21) Application number: 13198663.0
(22) Date of filing: 19.12.2013
(51) Int. Cl.: G06F 13/10, H04W 4/00

(54) **Computer apparatus**

(30) Priority: 21.12.2012 GB 201223151
(71) Applicant: Nomad Spectrum Limited, Tyne and Wear NE1 3DQ (GB)
(72) Inventor: Joergensen, Torben, Newcastle Upon Tyne Tyne and Wear, NE1 3DQ (GB); Carroll, Caleb, Newcastle Upon Tyne Tyne and Wear, NE1 3DQ (GB)
(74) Representative: Kenrick, Mark Lloyd

(57) **Abstract**

A computer apparatus comprising a memory, a first processor arranged to read and execute processor readable instructions stored in the memory, a peripheral device connected to and controlled by the first processor and a second processor in communication with the first processor, the second processor being operative to control an operative state of the peripheral device.

## Description

The present invention relates to a computer apparatus. More particularly, but not exclusively, the invention relates to a communications control unit for enabling communications between a first network and one or more local devices which may be located aboard a vehicle such as a train.

With the increased portability of computers, and the increasing sophistication of mobile devices such as mobile telephones and palmtop computers, there is a growing demand for Internet connectivity while on the move. One response to this demand is based upon devices having built-in long-range telecommunications capabilities, such as devices which make use of mobile telephone networks. While such solutions can be effective, they sometimes suffer from problems of low bandwidth and incomplete geographic coverage. The problem of low bandwidth is a particular issue when a user wishes to access content comprising a large quantity of data (for example video content). The problem of incomplete geographic coverage is particularly problematic when a user is moving, given that data communication may be interrupted when a signal is lost (for example when a train enters a tunnel).

An alternative method of providing Internet connectivity to mobile devices is based upon the use of access points. Such access points may be provided, for example, in public buildings such as libraries and cafes, and can be accessed by mobile computing devices which are located within a predetermined range of the access point. One common technology used to allow mobile computing devices to connect to such access points is specified by IEEE standard 802.11, and is commonly referred to as Wi-Fi. The use of access points in this way is advantageous in that it allows higher bandwidth connections to be established.

The limitations of systems based upon the connection of mobile devices to mobile telephone networks has led to the proposal that public transport vehicles, such as trains or buses, may be beneficially provided with wireless access points, such that mobile computing devices used by passengers traveling in the vehicle can be provided with Internet connectivity.

The provision of Internet connectivity to a vehicle can be specially tailored to cope with the routes traveled by the vehicle, such as through tunnels and cuttings. More power is available on the vehicle than on a mobile computing device, meaning that systems fitted to vehicles can generally support larger, higher gain antennas than those that are generally installed in portable user devices such as mobile telephones. Furthermore, greater computational power can be used in signal processing in a device associated with a vehicle given that there is room for larger, more powerful processing devices.

Different types of communication links can be used to provide data communication to a vehicle, separately or together, appropriate to the locations through which the vehicle travels. Furthermore, if a vehicle's route is known, the communication links can be managed to provide a higher level of service with greater bandwidth, lower latencies, and fewer losses of connection than if the communications were made directly to individual users using a mobile telephone network. Individual users using a mobile telephone network are reliant on the transmission and receiving power of the device which they are using, and may be further limited by the computational power available in the mobile device. It follows that the provision of a wireless access point on board a vehicle has considerable advantages. Such provision does, however, bring challenges.

As with communications directly between mobile telephones and a mobile telephone network, communications between a mobile access point and a mobile telephone network may be susceptible to fluctuations in signal strength or temporary loss of signal. In such a situation, a modem of the access point which had previously established a connection to a mobile telephone network may become unresponsive if a connection is terminated unexpectedly. It is a disadvantage of some known access points that they may become unresponsive if a connection is interrupted, preventing further operation and preventing a connection from being re-established.

Furthermore the nature of public transport routes is such that environmental conditions can vary significantly between locations on one route, or between different routes. It is disadvantage of some known systems that they may fail to operate predictably when exposed to extreme environmental conditions.

Known systems, however, suffer from performance disadvantages through their failure to make most effective use of available resources, such as maintaining or reestablishing lost connections with base stations and other devices, and maintaining predictable operation in extreme environmental conditions. There is therefore a need for an improved wireless data communications apparatus for use on a moving object, such as a vehicle, that provides improved performance.

In order to manage communication between users aboard a vehicle such as a train and a wide area wireless network - such as a cellular data network - it is known to provide a communication control unit (CCU) aboard a vehicle. The CCU is arranged to perform various communication functions.

The present invention provides developments in computer apparatus which can be usefully employed in the implementation of a CCU.

According to a first aspect of the present invention there is provided a computer apparatus comprising a memory; a first processor arranged to read and execute processor readable instructions stored in the memory; a peripheral device connected to and controlled by the first processor; and a second processor in communication with the first processor, the second processor being operative to control an operative state of the peripheral device.

In this way, the first processor may perform desired processing involving the peripheral device while the second processor manages operation of the peripheral device in some way. This allows for control of the operative state of the peripheral device to be delegated from the first processor to the second processor. This can be advantageous as it removes a processing burden from the first processor. Additionally, such delegation allows modifications to be made to the desired processing carried out by the first processor without affecting control of the peripheral. In some embodiments, control of the operative state of the peripheral device may be "locked down" so as to allow easy modification of the processing carried out by the first processor without any effect on control operations carried out by the second processor.

The second processor may be operative to control the operative state of the peripheral device by controlling power supplied to the peripheral device. That is, the second processor may turn the peripheral device "on" and "off".

The second processor may be configured to control the operative state of the peripheral device in response to data received from the first processor. The first processor may provide some form of indication of an event to the second processor and in response to such indication the first second processor may exercise control of the operative state of the peripheral device.

The processor readable instructions may be arranged to cause the first processor to determine the state of the peripheral device and to cause the first processor to transmit data to the second processor if the peripheral device has a predetermined state. The predetermined state may be an unresponsive state.

The second processor may be configured to, in response to receipt of data from the first processor indicating that the peripheral device is in a predetermined state (for example an unresponsive state), disconnect the peripheral device from a power supply and subsequently reconnect the peripheral device to the power supply. Such disconnection and reconnection is sometimes referred to as "power cycling".

The peripheral device may be a communication device. For example, the peripheral device may comprise an interface component managing data transfer with the first processor and one or more communications components such as modems, wireless interfaces and the like. Such communications components may facilitate data transfer between the peripheral device and a communications network.

The peripheral device may comprise a plurality of communications modules and the second processor may be operable to select one of the plurality of communications modules to be used for communication. Where the peripheral device is a wireless communications device providing connectivity with a wireless network, each of the plurality of communications modules may be a subscriber identity module (SIM). Each subscriber identity module may be configured for use with a respective communications network, for example a respective mobile telephony network.

The apparatus may further comprise a temperature sensor. The second processor may be operative to monitor an output of the temperature sensor and to control an operative state of the first processor and/or the peripheral device based upon said output.

The second processor may be operative to control power supplied to the first processor and/or the peripheral device based upon said output.

Control of the operative state of the first processor and/or peripheral device based upon an output of a temperature sensor allows the first processor to be disabled by the second processor in the event that the temperature is not at an acceptable level. For example, the second processor may compare the output of the temperature sensor with predetermined maximum and minimum operating temperatures and disable the first processor if the temperature is outside a range defined by the predetermined maximum and minimum temperatures. Such disabling may be complete disabling of the first processor or disabling of particular functions of the first processor.

Communication between said first processor and said second processor may be encrypted. The second processor may comprise an encryption module. In this way, secure communication between the first and second processors may be provided.

The second processor may comprise embedded memory such as read only memory. The second processor may be configured to read and execute instructions stored in the read only memory. The use of embedded memory provides enhanced security for operation of the second processor as there is no risk of reads and writes of data to the memory being monitored.

The apparatus may comprise a plurality of peripheral devices. An operative state of each peripheral device may be controllable by the second processor independently of others of said peripheral devices. Such control may be exercised by the second processor in accordance with any one or more of the methods set out above in connection with a single peripheral device.

A further aspect of the invention provides a computer apparatus comprising a memory; a first processor arranged to read and execute processor readable instructions stored in the memory; a sensor; a second processor in communication with the first processor, the second processor being operative to monitor an output of the sensor and to control an operative state of the first processor based upon the output of the sensor.

In this way, control of the operative state of the first processor may be exercised externally of the first processor based upon a sensor signal.

The sensor may be selected from the group consisting of a temperature sensor, a voltage sensor and a current sensor.

The second processor may be operative to control power supplied to the first processor based upon the output of the sensor.

A computer apparatus in accordance with any of the aspects described above may be arranged to facilitate wireless communication with a first wireless network and to facilitate communication with one or more local devices such that said local devices can communicate with said first wireless network. That is, the computer apparatus may be a communications control unit.

In one aspect there is provided a communications control unit arranged to facilitate data communication between a first wireless network and one or more local devices, the communications control unit comprising: a memory; a first processor arranged to read and execute processor readable instructions stored in the memory, said processor readable instructions being arranged to control said data communication; a second processor in communication with the first processor, the second processor being operative to control an operative state of the first processor.

The communications control unit may further comprise a sensor. The second processor may be operative to control an operative state of the first processor based upon an output of the sensor.

The communications control unit may further comprise one or more input devices providing input signals to the second processor, the second processor being operative to control the operative state of the first processor based upon said input signals. Such input devices may take the form of push-button input devices.

The first wireless network may be a wide area cellular network. Communication with one or more local devices may be carried out using wireless local area network connections-for example connections according to the IEEE 802.11 standard.

The apparatus may be mounted aboard a vehicle and the local devices may be located within the vehicle. Such a vehicle may be a train, bus, aircraft, ship or indeed any vehicle.

In all aspects discussed above, the first processor, the second processor and, where provided, the peripheral device may be mounted on a single circuit board.

It will be appreciated that where features are discussed in the context of one aspect they may be applied to other aspects.

An embodiment of the invention will now be described, by way of example, with reference to the accompanying drawings, in which:
Figure 1 is a schematic illustration of a computing device on board a train accessing a network via a communication control unit;
Figure 2 is a schematic illustration showing components of the communications control unit of Figure 1 in further detail; and
Figure 3 is a schematic illustration showing components of the communications control unit of Figures 1 and 2 in yet further detail.

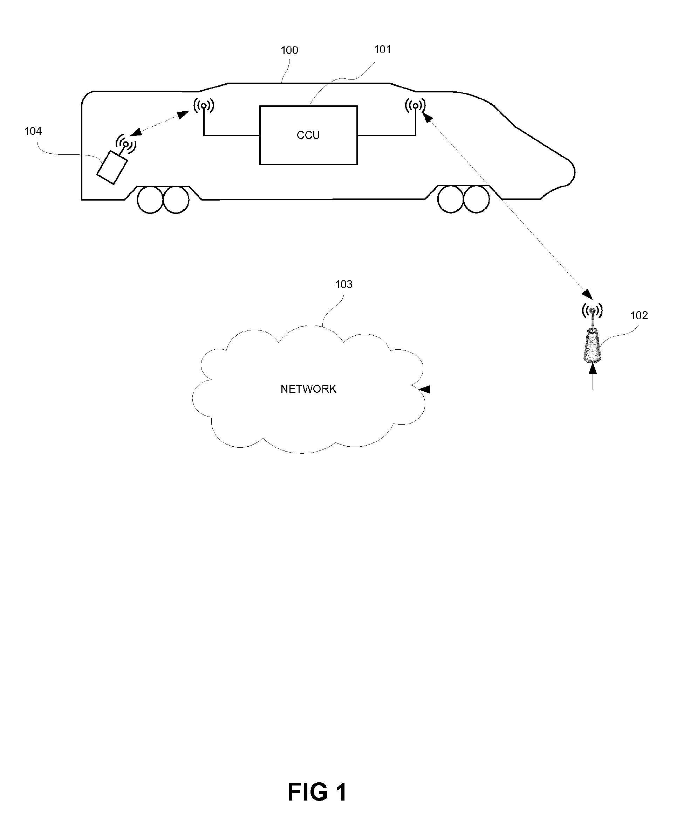

Figure 1 shows a network and apparatus which are used to provide data communication to a train 100. The train 100 is provided with a communications control unit (CCU) 101 which is arranged to connect to a base station 102. The base station 102 is connected to a network 103, such as a WAN. Both the CCU 101 and the base station 102 are provided with wireless communications interfaces to allow a wireless connection to be established between the base station 102 and the CCU 101. The CCU is provided with a further communications interface which is configured to allow a data connection to be established with a user device 104 on the train 100. A user may establish a data connection between the user device 104 and the CCU 101. Where a plurality of user devices are connected to the CCU 101 a LAN including the user devices and the CCU 101 is established. The connection between the user device 104 and the CCU 101 can take any suitable form but may, for example, be a Wi-Fi connection.

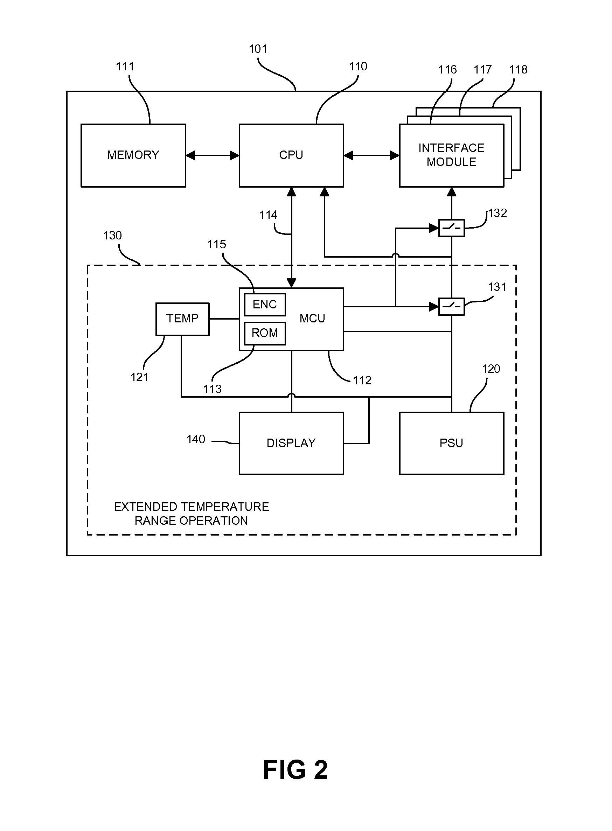

Figure 2 shows the CCU 101 in more detail. The CCU 101 comprises a general purpose central processing unit (CPU) 110. The CCU 101 further comprises a memory 111, which may be provided in the form of volatile random access memory (RAM). The CPU 110 is configured to read and execute instructions which are stored in the memory 111.

The CCU 101 further comprises a second processor 112. The second processor 112 is a micro controller unit (MCU). The MCU 112 is a RISC processor. The MCU 112 comprises embedded non-volatile read only memory (ROM) 113. The ROM 113 is capable of storing instructions which the MCU 112 is configured to read and execute. The MCU 112 is configured to read instructions stored on the ROM 113 when it is initialized or reset, in preference to any external memory such as a RAM.

The CPU 110 manages and controls several communications functions of the CCU 101 in accordance with program instructions executed by the CPU 101. The MCU 112 controls and manages several system management and configuration functions within the CCU 101.

The MCU 112 and CPU 110 communicate via an encrypted interface 114. The encrypted interface 114 uses public/private key encryption. The use of an encrypted interface 114 allows communication between the MCU 112 and the CCU 110 to remain secure. The use of public/private key encryption allows a public key provided by the MCU 112 to be used by the CPU 110. The CPU 110 can use the public key to encrypt communications destined for the MCU 112 and in this way only the MCU 112 is able to read such communications from the CPU 110. Additionally, the use of public/private key encryption allows the MCU 112 to sign any communications destined for the CPU 110 with the private key of the MCU 112, and for the CPU 110 to verify that such signed communications originate from the MPU 112 using the public key of the MCU 112.

The MCU 112 is configured to execute only instructions which are stored on the embedded ROM 113, and therefore cannot be caused to perform operations which it was not intended to perform. The use of an embedded memory ensures instruction fetch memory accesses cannot be observed or manipulated by a third party. Furthermore, the use of ROM prevents the modification of the instructions which are executed by the MCU 112. In this way, it is possible to ensure that the MCU 112 is not susceptible to interference from third parties, and can remain secure.

The CPU 110, on the other hand, reads instructions from memory 111 which is an external program memory. The memory 111 may be contained on a hard disc drive (HDD), a flash memory, such as a compact flash (CF) card, a secure digital (SD) card, or a microSD card. In contrast to the secure memory 112 of the MCU 112, the accessible and replaceable memory 111 of the CPU 110 allows the instruction code for the CPU 110 to be upgraded and/or modified if required. This flexibility allows changes in communications protocols, data usage policies or network configurations to be dealt with simply.

The encrypted interface 114 is a two wire bus such as, for example, an I²C or an SMBus. The bus master is the MCU 112, allowing the MCU 112 to initiate transfers on the bus, and to abort transfers which do not complete if the CPU 110 is unresponsive.

The CCU 101 further comprises a first, second and third interface modules 116, 117, 118. The plurality of interface modules 116, 117, 118 are connected to and controlled by the CPU 110. Each of the plurality of interface modules 116, 117, 118 allows a connection to be established with a communications network. For example, the first interface module 116 allows the CCU 101 to establish a connection with the network 103 described above. The second interface module 117 allows the CCU 101 to establish a connection with a wired Ethernet network. The third interface module 118 allows the CCU 101 to establish a wireless connection with the user device 104 within the train 100. In this way, the CCU 101 allows a user device 104 on the train 100, to be connected to the CCU 101 and thereby to access the Internet via the network 103.

It will be appreciated that there may be more than three interface modules, each of which may be similar to one of the first, second or third interface modules, or different.

The CCU 101 further comprises a power supply unit (PSU) 120. The PSU 120 is arranged to supply power to the CPU 110 and to any peripheral components connected to it, such as the interface modules 116, 117, 118. The PSU 120 is further arranged to supply power to the MCU 112 in the manner described below.

The CCU 101 is further provided with a temperature sensor 121, which is configured to monitor the temperature of the environment in which the CCU 101 is operating. The temperature sensor 121 is supplied with power by the PSU 120. The MCU 112 is configured communicate with the temperature sensor 121 via a Series Peripheral Interface (SPI) bus. The MCU 112 is configured to monitor the output of the temperature sensor 121.

The CPU 110 is a standard component and as such has a predetermined safe operating temperature range, which may be, for example 0 °C to +40 °C.

The MCU 112 and the temperature sensor 121, however, are designed to operate across a wider operating temperature range, allowing them to operate in extreme conditions under which the CPU 110 cannot reliably operate. For example, the CPU 110 may not be reliably operated below 0 °C whereas the MCU 112 and temperature sensor 121 may operate reliably as low as -40 °C. The CPU 110 may not be reliably operated above +40 °C whereas the MCU 112 and temperature sensor 121 may operate reliably as high as +85 °C.

Figure 2 additionally shows a region 130 of the CCU 101 which can operate throughout the extended temperature range, shown enclosed by a dotted line.

The CCU 101 is further provided with a power relay 131 which controls the supply of power to the CPU 110 from the PSU 120. The power relay 131 is in turn controlled by the MCU 112, with the control input to the power relay being a digital output of the MCU 112. In this way, the MCU 112 can control the power to the CPU 110 and any connected peripherals.

The CCU 101 is further provided with a second power relay 132 which controls the supply of power to the plurality of interface modules 116, 117, 118 which are connected to the CPU 110. The power relay 132 is also controlled by the MCU 112, with the control input to the power relay being a digital output of the MCU 112. In this way, the MCU 112 can prevent power being supplied to any peripherals connected to the CPU 110, while allowing power to be provided to the CPU 100 itself.

It will be seen that all components included in the CCU 101 which are not within the extended temperature range region 130 can be controlled by at least the power relay 131 or additionally by power relay 132. As described above, when the CCU 110 is exposed to harsh operating conditions the MCU 112 is operative to disable any components which are not designed to operate correctly in such conditions, protecting them from damage or unexpected operating characteristics.

The CCU 101 is further provided with an LCD display 140. The LCD display 140 is connected to the MCU 112 via a serial or SPI bus. The LCD display 140 comprises a backlight, which is controlled by a digital output of the MCU 112. The LCD display 140 is supplied with power by the PSU 120.

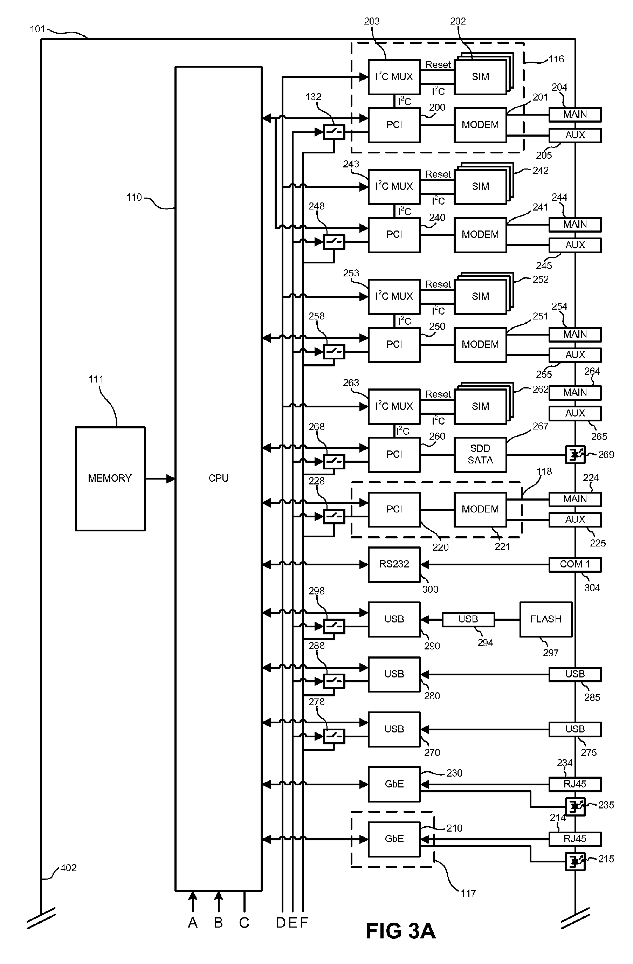

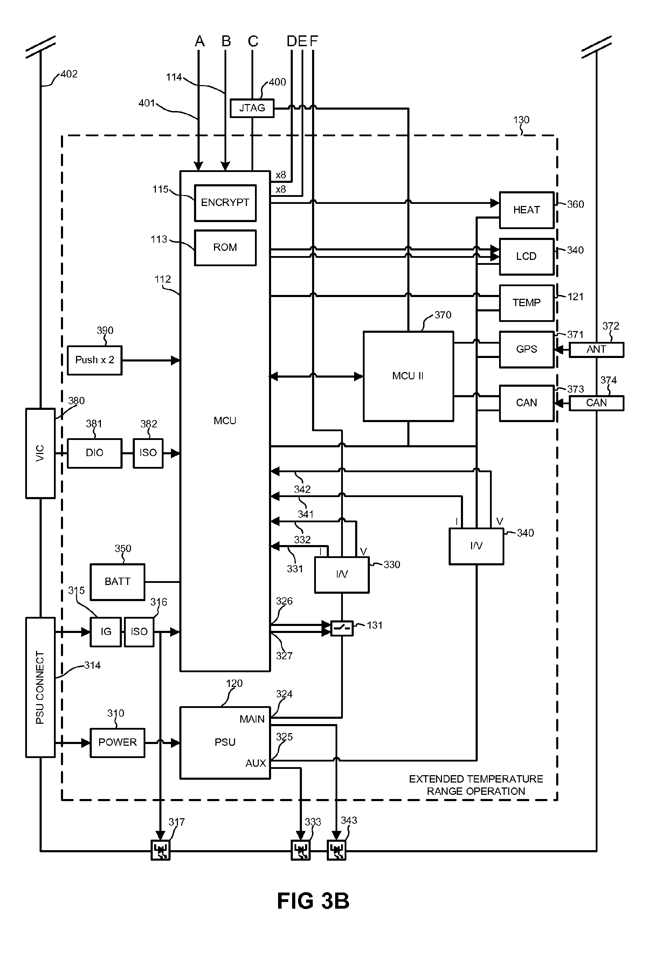

Figure 3 shows in further details the architecture of the CCU 101. Figure 3 is split into two parts, Figure 3A and Figure 3B. Lines A, B, C, D, E and F represent connections between Figures 3A and 3B. The boundary 402 of the CCU 101 is represented by a line in both Figures 3A and 3B, which should be taken to be continuous across both parts of the figure.

The interface modules 116, 117, 118 illustrated in Figure 2 are exemplary interface modules, which take several forms. Each of the interface modules comprises a selection of components as required to establish connections with the various devices and networks with which they communicate. The interface modules 116, 117 and 118 are shown in more detail in figure 3, where the components comprising each interface module are shown.

The interface module 116 is comprised of an interface component 200, such as a Mini PCI express (mini PCIe) interface component, which is operative to communicate with the CPU 110 via a USB 2.0 interface. The interface module 116 further comprises a modem 201. The modem 201 is arranged to establish a connection with a WAN such as a mobile telephone network. The modem 201 is connected to the CPU 110 via the interface component 200. The interface module 116 further comprises a plurality of SIM holders 202. In the embodiment illustrated in figure 3, three SIM holders are provided in the interface module 116. Each of the SIM holders 202 is arranged to receive a SIM card. The SIM holders 202 are connected via an I²C multiplexer 203 to the interface component 200. The I²C multiplexer 203 is configured to connect a single one of the three SIM holders 202 to the interface component 200 under the control of the MCU 112. The MCU 112 effects control over the address selection of the I²C multiplexer 203 with two digital output lines, allowing four unique addresses to be selected (00, 01, 10, 11).

The CCU 101 is provided with a main connector 204 which allows for connection of transmit/receive hardware such that data can travel between the modem 201 and a WAN. Additionally an auxiliary connector 205 is provided, allowing for connection of additional or alternative transmit/receive hardware.

It will be appreciated that if only two SIM holders are required, then only a single address control line is required providing two unique addresses (0, 1). Additionally, if more than four SIM holders are required then further address control lines will be required.

A reset connection is also provided between the I²C multiplexer 203 and each of the SIM holders 202. This can be used to reset the SIM holders 202 under the command of the MCU 112. For example a reset signal is provided (not shown) as a digital output from the MCU 112 to the I²C multiplexer 203 in addition to an address transmitted on the address control lines. The I²C multiplexer 203 is arranged to perform a reset of the addressed SIM holder 202 when the reset signal is applied to the I²C multiplexer by the MCU 112.

The interface component 200 is connected to the PSU 120 by the power relay 132 which controls the power supplied to the interface component 200, and the other components within the interface module 116.

The provision of three SIM holders 202 and cards (not shown) allows the modem 201 to which the SIM holders 202 and cards are connected to connect to a plurality of networks. For example, each of the SIM cards may allow a data connection to be established to a different mobile telephone network. For example, a first SIM card may be selected which allows a wireless modem to connect to a first mobile telephone network, whereas a second SIM card may allow the same wireless modem to connect to a second mobile telephone network, where both mobile telephone networks are based in the same region or country. It may be preferable to select a particular network depending on characteristics of that particular network. Such characteristics may include the extent of network coverage at a particular time, or at a particular location, or the bandwidth available from the particular network. Such characteristics may be compared to absolute criteria or alternatively may be dependent upon characteristics of others of the networks.

Alternatively, a first SIM card may allow a wireless modem to connect to a first mobile telephone network in a first country, whereas a second SIM card may allow the same wireless modem to connect to a second mobile telephone network in a second country. In this way, the use of a plurality of SIM cards allows the CCU 101 to establish connection to a local network in a plurality of countries, but using an appropriate SIM card in each country, obviating the need to connect via expensive roaming data tariffs.

In a further alternative circumstance, each SIM card may contain the information required to establish a connection with a single mobile telephone network with a different user profile. For example, alternative SIM cards may be selected if the communications to be carried over the network are particularly data intensive, or require a particular latency, or bandwidth.

The interface module 116 is a first example of one of the plurality of interface modules 116, 117, 118 shown in Figure 2. The interface module 117 is a further interface module which comprises a Gigabit Ethernet (GbE) component 210. The GbE component 210 is connected to and controlled by the CPU 110. The GbE component 210 is an external 10/100/1000 GbE controller. The GbE component 210 is connected to a LAN connector 214 to allow connection to a LAN. The LAN connector 214 is either an RJ45 or M12 connector, although equivalent or suitable alternative connectors may be used instead. The GbE component 210 is further provided with a LAN status LED 215 which is arranged to indicate the status and/or activity of the interface module 117.

The interface module 118 is a further interface module which comprises a Mini PCI express (PCIe) interface component 220 which is connected to the CPU 110 by a mini PCIe interface. The interface module 118 further comprises a wireless LAN modem 221, which is connected to the mini PCIe interface component 220.

The interface module 118 is provided with a main connector 224 which allows a connection to be made from the wireless LAN modem 221 to a transmit/receive component to allow data communication using the Wi-Fi standard. Additionally an auxiliary connector 225 is provided, allowing an additional or alternative connection to be made to a Wi-Fi network.

The interface module 118 is supplied with power by the PSU 120. The power supplied to the interface module 118 can be controlled by a power relay 228, which allows power to the interface module 118 to be controlled independently of the power supplied to the CPU 110 and the other peripheral components connected to the CPU 100 such as the interface module 116. The power relay 228 is controlled by a digital output of the MCU 112.

The CCU comprises a further GbE interface, comprising a GbE component 230 which is provided with a LAN connector 234 and a status LED 235. The operation of the GbE component 230 is similar to that described above in relation to the GbE component 210. While only two such GbE interfaces are shown in Figure 3, further GbE interfaces may be provided in the CCU 101.

The CCU 101 is further provided with a plurality of PCI interface components 240, 250 to which are connected respective modems 241, 251, SIM holders 242, 252, I²C multiplexers 243, 253, main connectors 244, 254, and auxiliary connectors 245, 255, which are arranged to provide further interface modules and connectors capable of establishing a connection with WANs. The operation of each further interface module is similar to that described above in relation to the interface module 116.

The PCI interface component 240 is connected to the CPU 110 via the same USB 2.0 connection as the PCI interface component 200. The PCI interface component 250 is connected to the CPU via a mini-PCIe interface.

The PCI interface component 240 and PCI interface component 250 are supplied with power from the PSU 120 through a power relay 248, and a power relay 258 respectively, which are controlled by respective digital outputs of the MCU 112.

The CCU 101 is further provided with a PCI interface component 260, a further I²C multiplexer 263 and a further plurality of SIM holders 262, arranged in a similar fashion to those described in relation to interface module 116.

The CCU is provided with an additional main connector 264 and an auxiliary connector 265, which are not connected to any internal components. The additional main and auxiliary connectors 264, 265 could be connected to a further modem, which could be connected to the PCI interface component 260, enabling the CCU 101 to establish a further connection to a WAN. The main connector 264 and auxiliary connector 265 are arranged for connection to suitable transmit/receive hardware.

In the embodiment shown in Figure 3, the PCI interface component 260 is connected to a SATA solid-state drive (SSD) 267. The SSD 267 contains a set of computer readable instructions which provide the operating system for the CCU 101. The PCI interface component 260 is connected to a HDD status indicator LED 269 which is located at the external boundary 402 of the CCU 101, providing an indication to a user of the status of the SSD 267. Alternatively the HDD status indicator LED 269 may indicate that a memory access is being performed to the SSD. The SSD 267 is connected to the PCI interface component 260 by a Next Generation Form Factor (NGFF) socket. The PCI interface component 260 is supplied with power from the PSU 120 through a power relay 268, which is controlled by a digital output of the MCU 112.

The PCI interface component 260 is connected to the CPU 110 via a SATA interface.

The CCU 101 further comprises a plurality of USB 2.0 interfaces. A first USB interface 270 is provided with a USB A-type connector 274, which is located at the external boundary 402 of the CCU 101 allowing external USB components to be connected to the CCU 101. The USB interface 270 communicates with the CPU 110 using a USB protocol, and receives power from the PSU 120 via a power relay 278, which is controlled by a digital output of the MCU 112.

A second USB interface 280 is provided with a USB A-type connector 284, which is located at the external boundary 402 of the CCU 101 allowing external USB components to be connected to the CCU 101. The USB interface 280 communicates with the CPU 110 using a USB protocol, and receives power from the PSU 120 via a power relay 288, which is controlled by a digital output of the MCU 112.

A third USB interface 290 is provided with a USB A-type connector 294, which is located within the external boundary 402 of the CCU 101 allowing USB components to be connected to the CCU 101. A USB flash drive 297 is connected to the USB A-type connector 294, allowing the CPU 110 to access the data stored on the USB flash drive 297. The USB interface 290 communicates with the CPU 110 using a USB protocol, and receives power from the PSU 120 via a power relay 298, which is controlled by a digital output of the MCU 112.

While a USB flash drive is shown connected to the USB interface 290 in this embodiment, it will be appreciated that other USB components, such as an alternative USB storage device, or a USB modem, can instead be connected to the interface as required.

The CPU 110 is further connected to a serial interface 300, which is connected to a serial connector 304 at the external boundary 402 of the CCU 101. The serial interface 300 may communicate by RS232, RS422, RS485 or any suitable equivalent interface standard.

It can be seen that each of the PCI interface components 200, 220, 240, 250 and 260 and USB interfaces 270, 280, 290 has a respective independent power relay 132, 228, 248, 258, 268, 278, 288, 298 which controls the power supply to the interface module. Each of the plurality of power relays 132, 228, 248, 258, 268, 278, 288, 298 can control the supply of power to one of the peripheral devices connected to the CPU 110. Each of the power relays 132, 228, 248, 258, 268, 278, 288, 298 is controlled by the MCU 112. In this way, the MCU 112 can control the power to the each of the peripheral devices connected to the CPU 110 independently. The MCU 112 is provided with eight digital outputs, one to control each of the eight power relays 132, 228, 248, 258, 268, 278, 288, 298.

It will be appreciated that if further peripheral components are provided in the CCU 101 connected to the CPU 110 they can each be provided with an additional power relay and corresponding digital output from the MCU 112.

In operation, if the CPU 110 detects that a peripheral device to which it is connected has become unresponsive, or has malfunctioned in some way, the CPU 110 communicates this to the MCU 112 via the encrypted interface. The MCU 112 then outputs a signal on the digital output connected to the respective power relay, which causes the power relay to disconnect the connection between the PSU 120 and the peripheral device that has become unresponsive. The MCU 112 can then cause the power relay to reconnect the connection between the PSU 120 and the peripheral device, resetting the device and allowing the normal operation to resume. Such an operation may be referred to as "power cycling". While a device may be able to perform a reset using a normal data communications or control interface, such as a USB or PCI interface, in response to a command received from the CPU 110 this may not be as effective as providing the ability to power cycle a peripheral USB or PCI component by switching off and subsequently switching on the power supply to which it is connected.

In addition to the digital outputs which control the power relays 132, 228, 248, 258, 268, 278, 288, 298, the MCU 112 is provided with a plurality of digital outputs which are configured to control the I²C multiplexers 203, 243, 253, 263. In this way, the MCU 112 is operative to control which network the CPU 110 establishes a data connection to by controlling which SIM holder of the plurality of SIM holders 202, 242, 252, 262 connected to the multiplexers 203, 243, 253, 263 is selected.

In addition to the encrypted interface 114 between the CPU 110 and the MCU 112, the CPU 110 and the MCU 112 may additionally communicate via a USB interface 401. The USB interface 401 may also be encrypted by public/private key encryption.

The PSU 120 is configured to receive a DC input voltage between 6 and 36 volts. The CCU 101 is provided with a power supply connector 314 to allow a connection to be made with an external power supply such as a battery. The power supply connector is connected to the PSU 120 by a power input interface 310. The power input interface 310 is arranged to protect the PSU 120 from power surges which may damage the PSU 120.

The power supply connector 314 is further connected to a power input ignition device 315. The power input ignition device 315 is responsive to an ignition input to the power supply connector 310, which indicates that the CCU 101 is to be initialised. The power input ignition device 315 provides a signal to the MCU 112 indicating ignition. A power ignition indicator LED 317 is provided at the external boundary 402 of the CCU 101 which indicates the ignition status of the CCU 101. The power input ignition device 315 is connected to an analog input of the MCU 112 via an isolation device 316, which prevents possible damage to the MCU 112 by filtering any large amplitude signals from reaching the input of the MCU 112.

The PSU 120 comprises circuitry to convert the input voltage it receives into a suitable output voltage such as that which is required by the various parts of the CCU 101 described herein. The PSU 120 has two power outputs. A main power output 324 provides power to the CPU 110 and peripheral components connected to and controlled by the CPU 110. The main power output 342 is switchable by the main power relay 131 which is controlled by the MCU 112. The MCU 112 is provided with two digital outputs to control the main power relay 131. A first main power relay output is a set output 326, a second output being a reset output 327. The MCU 112 controls the operation of the main power relay 131 by sending a signal on the set output 326 to close the main power relay 131, connecting power to the CPU 110 and associated peripheral components and interfaces. To disconnect the main power supply, the MCU 112 sends a signal on the reset output 327, which opens the main power relay 131, disconnecting the main power supply.

A main power monitor 330 is provided to monitor the current and voltage supplied to the CPU 110 by the main power supply output 324 of the PSU 120. The main power monitor 330 comprises a current to voltage converter. The current to voltage converter provides a voltage output 331, the voltage output level being indicative of the current being drawn by the components connected to the main power supply output 324 of the PSU 120. Similarly, the main power monitor 330 provides a voltage output 332, the voltage output level being indicative of voltage level supplied by the main power supply output 324 of the PSU 120.

The voltage levels indicative of current and voltage of the main power supply are connected to analog inputs of the MCU 112, allowing the MCU 112 to monitor and manage the power consumed by the CPU 110 and associated peripherals components.

The CCU 101 may additionally be provided with a plurality of power monitors to monitor the power supplied to each of the peripheral components which is provided with a separately controllable power supply controlled by a power relay.

The PSU 120 also has an auxiliary power supply output 325. The auxiliary power supply output 325 provides power to the MCU 112, and any components within the extended temperature range region 130 as shown in Figures 2 and 3. The auxiliary power supply output 325 is monitored by an auxiliary power monitor 340, in a similar manner to the monitoring of the main power output 324 as described above. The auxiliary power monitor 340 comprises a current to voltage converter. The current to voltage converter provides a voltage output 341, the voltage output level being indicative of the current being drawn by the components connected to the auxiliary power supply output 325 of the PSU 120. Similarly, the auxiliary power monitor 340 provides a voltage output 342, the voltage output level being indicative of voltage level supplied by the auxiliary power supply output 325 of the PSU 120.

The CCU 101 is provided with a main power indicator LED 333 and an auxiliary power indicator LED 343 to indicate the status of main power output 324 and auxiliary power output 325 respectively.

The CCU further comprises a backup battery 350, which is connected to the MCU 112. The backup battery 350 provides power to the MCU 112 in the event that the power supply to the PSU 120 is disrupted.

The CCU 101 further comprises a pre-heater 360. The pre-heater 360 is supplied with power by the PSU 120, and is located in the extended temperature range region 130 of the CCU 101. The pre-heater 360 is controlled by a digital output of the MCU 112. The pre-heater 360 is usable to increase the temperature of the CCU 101 which is useful where the CCU 101 is operated in a low temperature environment. The digital output of the MCU 112 which controls the pre-heater 360 is capable of being driven in a pulse width modulated (PWM) manner. PWM control allows the pre-heater 360 to deliver a required heat output.

The CCU 101 further comprises a second MCU 370. The second MCU 370 is operative as a GPS and controller area network (CAN) bus controller. The second MCU 370 is connected to the first MCU 112 via an interface such as an I²C or SMBus.

The CCU 101 further comprises a high sensitivity GPS receiver 371. The GPS receiver 371 is connected to the second MCU 370 by a RS232 interface. The CCU 101 is provided with a GPS antenna connector 372 located at the external boundary 402 of the CCU 101 arranged to receive a GPS antenna.

The CCU 101 further comprises a CAN bus interface 373, which is connected to the second MCU 370 by a CAN bus. The CCU 101 is further provided with a CAN connector 374 located at the external boundary 402 of the CCU 101 arranged to allow a connection to be made to a vehicle wide CAN.

The second MCU 370, GPS receiver 371 and CAN controller 373 are each supplied with power from the auxiliary output 325 of the PSU 120, and are each located in the extended temperature range region 130 of the CCU 101.

The CCU 101 further comprises a vehicle interface connector (VIC) 380. The VIC 380 comprises a plurality of inputs and a plurality of outputs. The inputs and outputs are connected to the MCU via a digital in/out (DIO) interface 381 and an isolation device 382. The Isolation device 382 protects the MCU 112 from any high amplitude signals which may be inadvertently driven to inputs or outputs of the VIC 380, and which may, if allowed to reach the MCU 112, cause damage to the MCU 112.

The CCU further 101 comprises a plurality of push buttons 390. The push buttons 390 are connected to respective digital inputs of the MCU 112, allowing the MCU 112 to monitor the buttons so as to detect when one of the buttons 390 is pushed. A button push maybe interpreted in a number of ways, for example as a reset button, or to alter the system configuration or operative state in some way.

The CCU 101 further comprises a Joint Test Action Group (JTAG) interface 400. The JTAG interface 400 is operably connected to the CPU 110, MCU 112 and the second MCU 370. The CPU 110 is a master of the JTAG interface 400, while the MCU 112 and the second MCU 370 are both connected as slaves to the JTAG interface 400. The JTAG interface 400 allows the CCU 101 hardware to be tested and debugged, providing access boundary signals of all three processors (CPU 110, MCU 112 and MCU 370). The use of the JTAG interface 400 allows debugging of the MCU 101 by running test code and performing single step operation of each processor.

It will be appreciated that the while four sets of three SIM holders 202, 242, 252, 262 are used in the example described above, an alternative number of SIM holders and SIM cards may be provided. For example, an I²C multiplexer may be connected to 12 SIM holders, allowing a single modem to connect to a WAN using any one of the 12 SIM cards provided by the 12 SIM holders.

Alternatively, a field programmable gate array (FPGA) may be provided to allow a single bank of (e.g. 12) SIM holders to be accessed by a plurality of modems. In this way, the FPGA could act as a many-to-many interface device replacing the one-to-many operation of the I²C multiplexers (between a single modem and a plurality of SIM holders), thereby providing the CCU with a more flexible communications interface.

Furthermore, a combination of I²C multiplexers as shown in Figure 3, and an FPGA implementation of a many-to-many interface device, may be used together in an embodiment to allow any required configuration to be achieved.

It will be appreciated that various modifications can be made to the embodiments described above. All embodiments are exemplary, not limiting. In particular, it will be appreciated that the details of the interface modules are provided only as examples and any suitable interface modules can be used in embodiments of the invention. Indeed, any peripheral device can be used instead of any of the interface modules and any number of peripheral devices can be provided.

## Claims

1. A computer apparatus comprising:
a memory;
a first processor arranged to read and execute processor readable instructions stored in the memory;
a peripheral device connected to and controlled by the first processor; a second processor in communication with the first processor, the second processor being operative to control an operative state of the peripheral device,
wherein the processor readable instructions are arranged to cause the first processor to determine the state of the peripheral device and to cause the first processor to transmit data to the second processor if the peripheral device has a predetermined state.

2. A computer apparatus according to claim 1, wherein:
the second processor is operative to control the operative state of the peripheral device by controlling power supplied to the peripheral device; and/or
the second processor is configured to control the operative state of the peripheral device in response to data received from the first processor.

3. A computer apparatus according to any preceding claim, wherein the predetermined state is an unresponsive state.

4. A computer apparatus according to any preceding claim, wherein the second processor is configured to, in response to receipt of data from the first processor indicating that the peripheral device is in a predetermined state, disconnect the peripheral device from a power supply and subsequently reconnect the peripheral device to the power supply.

5. A computer apparatus according to any preceding claim, wherein the peripheral device is a communication device, wherein the peripheral device optionally comprises a plurality of communications modules and the second processor is operable to select one of the plurality of communications modules to be used for communication.

6. A computer apparatus according to any preceding claim, further comprising a temperature sensor, the second processor being operative to monitor an output of the temperature sensor and to control an operative state of the first processor and/or the peripheral device based upon said output, wherein the second processor is optionally operative to control power supplied to the first processor and/or the peripheral device based upon said output.

7. A computer apparatus according to any preceding claim, comprising a plurality of peripheral devices, an operative state of each peripheral device being controllable by the second processor independently of others of said peripheral devices.

8. A computer apparatus comprising:
a memory;
a first processor arranged to read and execute processor readable instructions stored in the memory;
a communication device comprising a plurality of communications modules connected to and controlled by the first processor;
a second processor in communication with the first processor, the second processor being operative to select one of the plurality of communications modules to be used for communication.

9. A computer apparatus according to claim 5 or 8, wherein the peripheral device is a wireless communication device providing connectivity with a wireless network, and each of the plurality of communications modules is a subscriber identity module (SIM).

10. A computer apparatus according to any preceding claim, wherein communication between said first processor and said second processor is encrypted, and wherein the second processor optionally comprises an encryption module.

11. A computer apparatus according to any preceding claim, wherein the second processor comprises embedded read only memory, the second processor being configured to read and execute instructions stored in the read only memory.

12. A computer apparatus comprising:
a memory;
a first processor arranged to read and execute processor readable instructions stored in the memory;
a sensor selected from the group consisting of a voltage sensor and a current sensor,
a second processor in communication with the first processor, the second processor being operative to monitor an output of the sensor and to control an operative state of the first processor based upon the output of the sensor.

13. A computer apparatus according to claim 12, wherein the second processor is operative to control power supplied to the first processor based upon the output of the sensor.

14. A computer apparatus according to any preceding claim, arranged to facilitate wireless communication with a first wireless network and to facilitate communication with one or more local devices such that said local devices can communicate with said first wireless network.

15. Apparatus according to claim 14, wherein:
the first wireless network is a wide area cellular network; and/or
communication with one or more local devices is carried out using wireless local area network connections; and/or
the apparatus is mounted aboard a vehicle and the local devices are located within the vehicle.

16. Apparatus according to any preceding claim, wherein the first processor and the second processor are mounted on a single circuit board and wherein optionally the peripheral device is also mounted on the single circuit board.
